# EUROPEAN PATENT APPLICATION

(11) **EP 1 722 582 A2**
(43) Date of publication of application: **15.11.2006**
(21) Application number: 06013911.0
(22) Date of filing: 10.10.1996
(51) Int. Cl.: H04Q 7/32, H04Q 7/22

(54) **Method and system for over-the-air (OTA) service programming**

(30) Priority: 10.10.1995 US 5011 P
(62) Divisional of application: 96936417.3
(71) Applicant: QUALCOMM INCORPORATED, San Diego, CA 92121-1714 (US)
(72) Inventor: Tiedemann, Edward G., San Diego, CA 92122 (US); Khan, Irfan, San Diego, CA 92126 (US); Holcman, Alejandro Raul, San Diego, CA 92124 (US)
(74) Representative: Dunlop, Hugh Christopher

(57) **Abstract**

A mobile station (2) configured for remote programming in a visited wireless communication system. The mobile station (2) includes a processing element configured to execute a set of instructions stored upon a memory element. The set of instructions are for changing a configuration of the mobile station (2) if an over the air programming code message is entered by a user of the mobile station (2) at the mobile station (2); passing an electronic serial number to a switching centre (10); and concurrently facilitating a voice link to a customer service centre (26,44) and a data connection to a home registry (18,38) of the mobile station (2), wherein the customer service centre (26,44) and the home registry (18,38) are not stations in the visited wireless communication system. A corresponding method is also provided as well as a system including the mobile station.

## Description

### BACKGROUND OF THE INVENTION

### I. Cross References to Related Applications

This application claims the benefit of U.S. Provisional application Serial Number 60/005,011, filed on October 10, 1995.

### II. Field of the Invention

This invention relates to communication systems, more particularly the present invention relates to an approach supporting over-the-air ("OTA") service programming of a mobile station.

### III. Description of the Related Art

Conventionally, an activation process for a newly purchased mobile station is a manually intensive and time consuming process. One of the limitation with this conventional activation process is that the user must bring the mobile station to a service center in order to activate the mobile station.

A Mobile Station is a subscriber station in the category of Domestic Public Cellular Radio Telecommunications Service, normally intended to be used while in motion or during halts at unspecified points. The category includes true mobile stations, handheld portable stations, fixed stations, and other devices.

At the service center a technician programs (stores) into the mobile station various parameters which include information that allows the unit to communicate on the network and which define the mobile station's network identity. Optionally, manufacturer specific information may also be programmed into the mobile station. Multiple parameter sets are sometimes provided in a mobile station so that, for example, the mobile station can have local identities in different service areas.

If information stored in a previously activated mobile station needs to be changed, conventionally the process is also manually intensive and time consuming. One of the limitations with this conventional process is that the user must bring the mobile station to a service center in order to have a technician change the information in the mobile station.

### SUMMARY OF THE INVENTION

Accordingly, one object of this invention is to provide a novel method to activate a mobile station for use within a communications network without the user having to bring the mobile station to a service center or third party.

Another object of this invention is to provide a novel method to change information in a mobile station for use within a communications network without the user having to bring the mobile station to a service center or third party.

Hereafter, these two objects of this invention, namely to activate a mobile station and to change information within a mobile station without the user having to bring the mobile station to a service center or third party will be referred to as over-the-air service programming (OTASP).

Another object of the present invention is to provide a signaling infrastructure to accomplish the over-the-air service programming of a mobile station for use within a communications network with minimal mobile switching center (MSC) and visitor location register (VLR) involvement.

The above and other objects are achieved according to the present invention by providing a new and improved signaling infrastructure and method for over-the-air service programming a mobile station for use in a communications network.

According to the invention, the mobile station transmits a message including an over-the-air service programming request, the mobile station identification presently stored in the mobile station and the mobile station's electronic serial number, to a mobile switching center coupled to the communications network. If the mobile station can have multiple identities, as discussed above, the user selects the mobile station identity to be in effect during the over-the-air service programming procedure.

An Electronic Serial Number is a 32-bit number assigned by the mobile station manufacturer, uniquely identifying the mobile station equipment.

The mobile station identification (MSID) can be either the mobile identification number (MIN) or the international mobile station identity (IMSI). Mobile Identification Number (MIN) is a 34 bit number that is a digital representation of the 10 digit number assigned to a mobile station. International Mobile Station Identity (IMSI) is a number up to 15 digits in length which uniquely identifies a mobile station internationally. In what follows, whenever we refer to a mobile identification number, it is implicit that an IMSI could very well be used in the place of MIN.

This results in the mobile station getting connected to an initial service unit via a voice connection. A Temporary Reference Number (TRN) identifying the mobile switching center and the mobile station is allocated for the mobile station at the mobile switching center. The TRN can be a mobile station identification (MSID), a telephone directory number or any other number.

In what follows, whenever we refer to a mobile identification number, it is implicit that an IMSI could very well be used in the place of MIN.

If the TRN is not an MSID, a unique and temporary mobile identification (MSID) must also be allocated for use during the service programming procedure.

The TRN and, if possible, the temporary mobile station identification (MSID) if one is allocated, the MSID presently in the mobile station, and the electronic serial number are sent to the service unit during voice connection set up. It may not be possible to send MSIDs and the electronic serial number to the service unit since some systems on the voice connection set up path may allow only valid directory numbers or allow only directory numbers assigned to the MSC to be passed.

If it is determined that the initial service unit is not the desired service unit, the voice call gets forwarded to one service unit after another until a desired service unit is reached. The TRN, and possibly the MSID and the electronic serial number, also get sent to the final service unit.

The final service unit selects a home location register within the communications network with which the mobile station is to be associated.

The home location register then gets associated with the mobile switching center by the home location register sending a message containing the TRN to the mobile switching center. The home location register is able to send a message to the mobile switching center because the TRN identifies the mobile switching center. The mobile switching center uses the TRN to identify the mobile station whose over-the-air service programming is being carried on. The mobile switching center sends a message back to the home location register containing the temporary MSID, if one was allocated at the mobile switching center, the MSID presently contained in the mobile station, and the mobile station's electronic serial number, if these were not received at the final service unit during voice call set-up. If the TRN is distinct from the temporary mobile identification number, it is released at the mobile switching center.

Hereafter, information regarding the mobile station contained at any network element is referenced using the temporary MSID, which could be the TRN itself, and the mobile station's electronic serial number.

The service unit or the home location register may query, via the communication network, the mobile station for some information contained in the mobile station. The service unit or the home location register may allocate a new permanent MSID for the mobile station and transfer service programming information, possibly including the newly allocated permanent MSID, into the mobile station via the mobile switching center using the communications network. The service unit also transfers service programming information associated with the mobile station into the home location register.

After the service programming information is successfully transferred to the mobile station, the service unit or the home location register sends a message to the mobile station via the communications network instructing it to transfer the service programming information to its non-volatile memory. The information sent to the mobile station is also stored in non-volatile memory in the HLR and/or authentication center (AC).

The mobile switching center is used merely as a conduit for messaging performed between the home location register and the mobile station and between the service unit and the mobile station.

The home location register includes a database that contains registration and user profile information for the system subscribers. The mobile switching center provides interconnection services among wireless subscriber stations, and between wireless subscriber stations and the public switched telephone network (PSTN) via one or more base stations (BS) under its control. The PSTN is a telecommunications network commonly accessed by ordinary telephones, private branch exchange trunks and data transmission equipment that provides service to the general public. The base station is a fixed station used for communicating with mobile stations. Depending on the context, the term base station may refer to a cell, a sector within a cell, an MSC, or other part of the cellular system.

The method of OTA service programming according to the present invention minimizes the involvement of the MSC and Visitor Location Register (VLR) with OTA processing. The VLR links to one or more MSCs, and includes a database for temporarily storing part of subscription data and, in certain cases, security related data for a mobile station currently served by its corresponding MSC.

The over-the-air service programming process also needs the involvement of the authentication center for the purpose of storing the mobile station's security related data and for performing security related procedures needed for downloading the Authentication-Key (A-Key) to the mobile station and for invoking voice privacy and/or signaling message encryption for security purposes on the air-link between the mobile station and the base station.

The Authentication Center (AC) is an entity that manages the security aspects related to the mobile station. The Authentication-Key is a concealed bit pattern stored in the mobile station and the AC. It is used to generate and update the mobile station's SSD, which is used for authentication, voice privacy and signaling message encryption. Shared Secret Data (SSD) is a bit pattern stored in the mobile station and known by the AC, and possibly by the VLR. Shared Secret Data is maintained during power off.

The service unit interfaces normally with the HLR. Hence communication between the service unit and the AC is generally via the HLR. To accomplish communication between the HLR and the AC, the present invention proposes new messages between the home location register and the authentication center.

Advantageous aspects of OTA service programming according to the present invention include:
1) OTA service programming according to the present invention need not involve the MSC/VLR with the details of service programming as the process is primarily one of initializing the mobile station's and HLR's/Authentication Center's (AC's) databases.
2) By minimizing the MSC/VLR involvement, enhancements to the OTA service programming process can be made without changing MSC and VLR software.
3) The HLR/AC controls the service programming process acting as a Service Control Point (SCP) to control over-the-air service programming.
4) For control, the CSC only needs to interface to the HLR. The voice connection to the CSC may be through the network or direct from the MSC. The method of OTA service programming according to the present invention supports either method.
5) The HLR can be chosen after the activation process begins. This allows the mobile station to activate anywhere within the operator's service area. Given the appropriate agreements and network support, there is nothing to prevent a mobile station from being activated in any HLR having connectivity with the MSC.
6) The MSC is used merely as a conduit for messaging performed between the HLR and the mobile station.

### BRIEF DESCRIPTION OF THE DRAWINGS

The features, objects, and advantages of the present invention will become more apparent from the detailed description set forth below when taken in conjunction with the drawings in which like reference characters identify correspondingly throughout and wherein:
FIG. 1 is block diagram of a network reference model with one HLR and one CSC;
FIG. 2 is block diagram of a network reference model with multiple HLRs and one CSC;
FIG. 3 is block diagram of a network reference model with multiple HLRs and separate CSCs;
FIG. 4A is a flowchart illustrating a process for programming a mobile using OTA service programming;
FIG. 4B is a continuation of the flowchart in Figure 4A;
FIG. 4C is a call flow diagram showing signaling in an exemplary communications network in which an original voice connection is call forwarded from a first CSC to a second CSC;
FIG. 4D is a continuation of the flowchart in Figure 4B;
FIG. 5 is a call flow diagram showing signaling for deregistering an old MSID associated with a mobile unit according to the present invention;
FIG. 6 is a call flow diagram showing an A-Key transfer procedure according to the present invention;
FIG. 7 is a call flow diagram showing an SSD update procedure according to the present invention; and
FIG. 8 is a call flow diagram showing a re-authentication procedure according to the present invention.

### DETAILED DESCRIPTION OF THE PREFERRED EMBODIMENTS

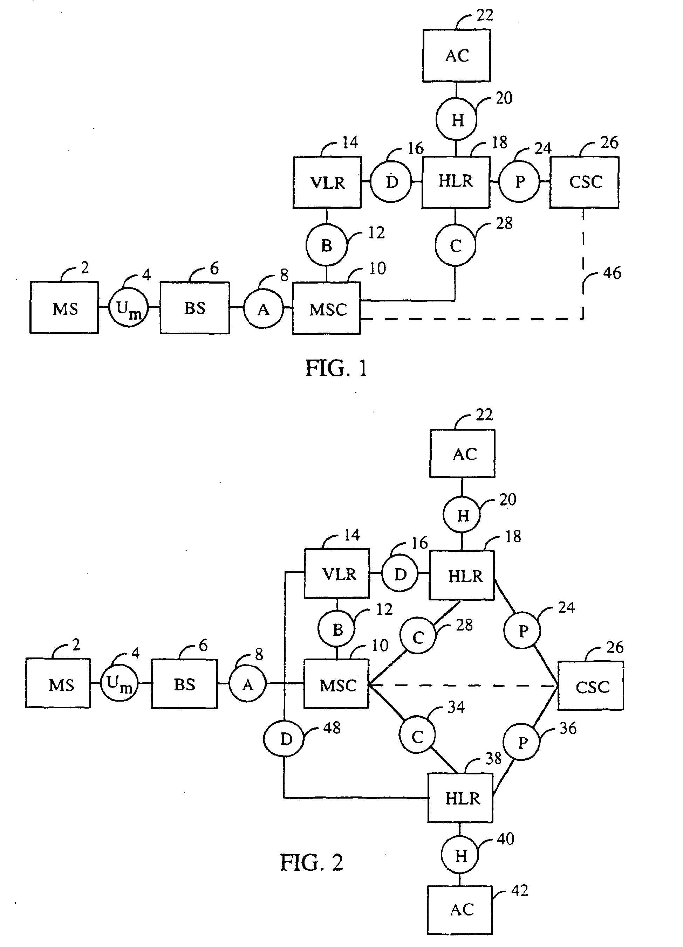

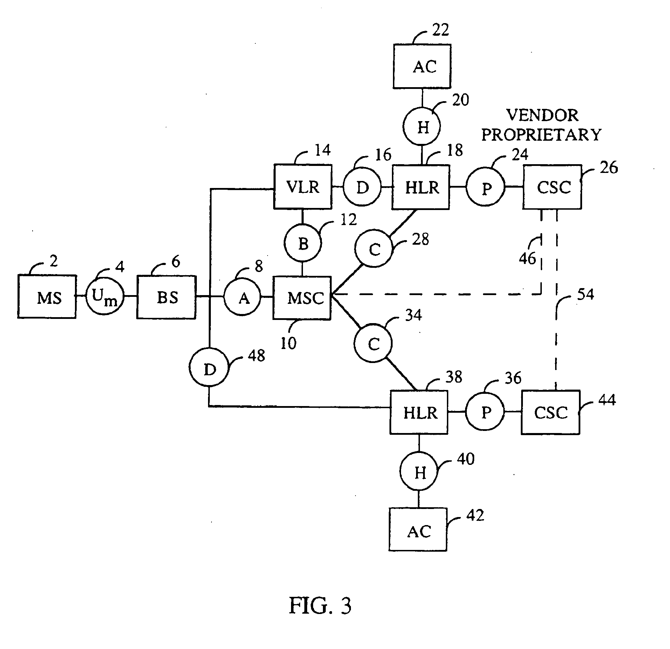

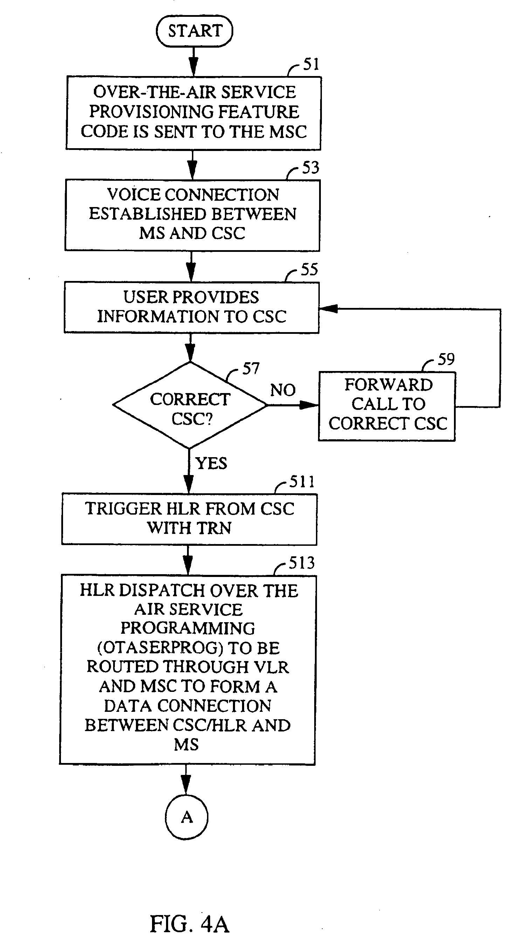

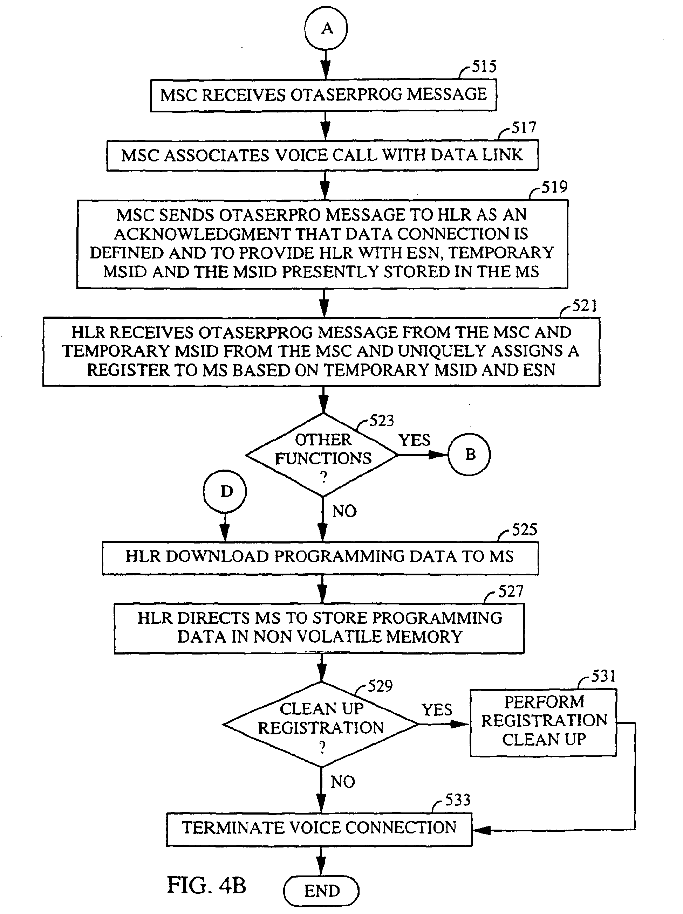

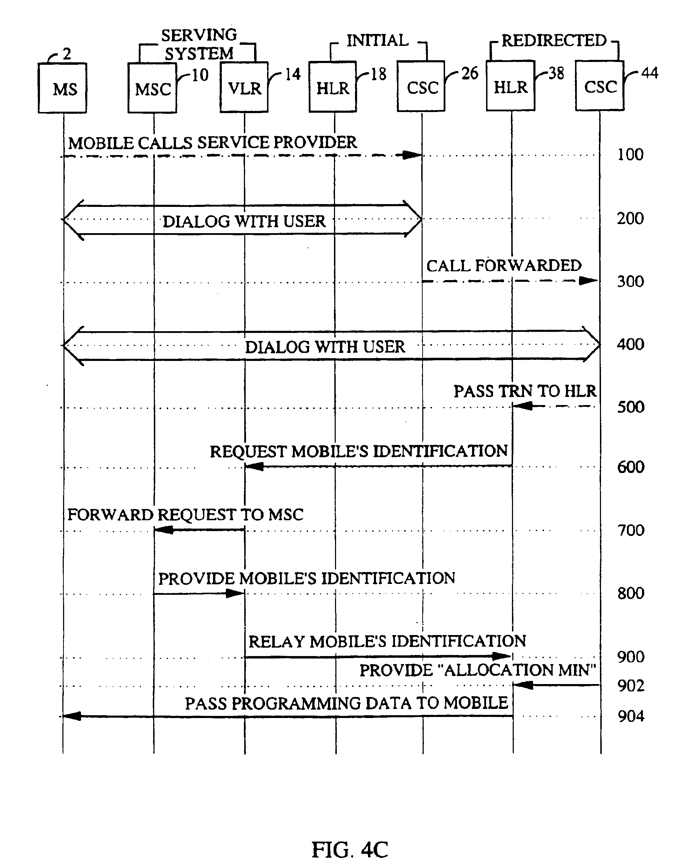

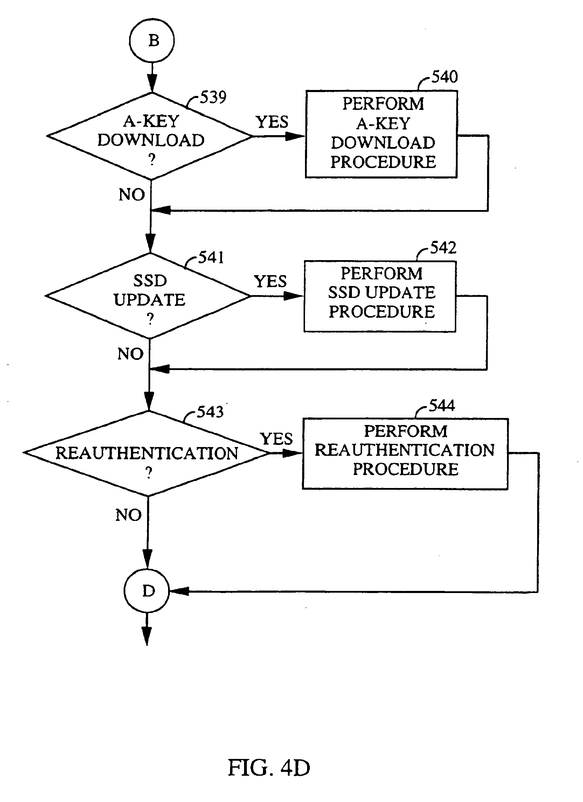

Referring now to the drawings, wherein like reference numerals designate identical or corresponding parts throughout the several views, and more particularly to FIG. 1 thereof, there is illustrated a block diagram of a network reference model **100** according to the present invention. In the description that follows, the network reference model is first explained and is followed by related network models illustrated in FIGS. 2 and 3. Subsequently, FIGS. 4A, 4B and 4D illustrate process steps employed by the network and FIGS. 4C, 5, 6, 7 and 8 illustrate signaling employed in the network.

The network reference model 100 of FIG. 1 includes a mobile station (MS) **2** coupled to a base station (BS) **6** via an interface, Uₘ, **4;** the BS **6** is coupled to a mobile switching center (MSC) **10** via an interface, A, **8;** the MSC **10** is coupled to a visitor location register (VLR) **14,** and a home location register (HLR) **18** via interfaces, **B,** 12, and C, **28,** respectively; the VLR **14** is coupled to the HLR **18** via an interface, D, **16;** and the HLR **18** is coupled to an authentication center (AC) **22** and a customer service center (CSC) **26** via interfaces, H, **20** and P (proprietary) **24,** respectively. A voice connection is established between the MSC **10** and the CSC **26,** as indicated by the dotted line **46.** Interfaces A, B, C, D, H and Uₘ are industry standard interfaces, and are used, for example in the Telecommunication Industry association (TIA) IS41-C standard on Cellular Radiotelecommunications Intersystem Operations. Note that in FIG. 1, there is only one HLR associated with the CSC.

FIG. 2 is a block diagram of a network reference model **200** including multiple HLRs. In addition to the elements of the network reference model **100,** the network reference model **200** includes an HLR **38** coupled to the CSC **26,** the MSC **10,** the VLR **14** and an AC **42** via interfaces P (proprietary) **36**, C **34,** D **48** and H **40,** respectively. FIG. 2 shows a case when there is a choice of HLRs on which the mobile station's data can be stored. In this case, a single CSC is affiliated with the HLRs.

FIG. 3 illustrates a block diagram of a network reference model **300** including multiple HLRs and CSCs. The network reference model **300** includes the elements of the network reference model **200** with an additional CSC **44** and the voice connection **54.** In this figure, HLR 38 is coupled to CSC **44** via interface P **36** and CSC **26** forwards the voice connection **46** to CSC **44** using voice connection **54** in a voice call-forward operation. In FIG. 3, each HLR **18, 38** corresponds to a different CSC **26, 44,** respectively.

Invocation of over the air (OTA) service programming according to the present invention will first be described with respect to the network architectures shown in FIGS. 1-3. Subsequently, the function and processes performed in accomplishing OTA service programming will be described with respect to FIGS. 4-8.

With reference to FIG. 1, OTA service programming begins with the mobile station (MS) **2** initiating an over-the-air service programming call. The user will initiate this call because, for example, the user has just purchased a mobile telephone from a retail vendor and the user wants to operate the telephone for normal use without having to travel to a service center to activate the phone, or because, the user wants to change information in the mobile station, or because, the service provider instructs the user to place an over-the-air service programming call in order for the service provider to change certain information in the mobile station. To accomplish this, the user inputs an over-the-air service programming code message at the mobile station **2** having a specific preamble, e.g., **"*22",** which indicates the user wishes to request over-the-air service programming. After the preamble, the user inputs data indicating the system desired. For example, the user enters "XXX" indicating a specific system over which the user wishes to subscribe, such as system A or system B **(*22800** or ***22801),** "YYYY" where YYYY is a System Identification number ("SID") of a preferred service provider, or "ZZZZZ" indicative of a Time Division Multiple Access (TDMA) System Operator Code (SOC). Instead of the user manually entering the over-the-air service programming code message on the mobile station, a user may press a button on the mobile station resulting in a similar effect as the one when the user manually enters the over-the-air service programming code message on the mobile station. If the mobile station can have multiple identities as discussed above, the user selects the mobile station identity to be in effect during the OTASP procedure. Through the air interface **4,** the mobile station **2's** call is passed to the serving MSC **10** via the base station **6** and interface **8.** At the same time an electronic serial number (ESN) of the user's mobile station and the MSID presently in the MS get passed to the MSC **10,** which the MSC **10** saves.

In response to the mobile station 2's call, the MSC **10** supplies a temporary reference number (TRN), associated with the mobile station **2** and which identifies the MSC, and routes the call to the CSC **26** via voice connection **46.** The TRN can be a mobile station identification (MSID), a directory number or any other number. Alternatively, traceable TRNs are used where the CSC can screen the incoming TRN to determine if the TRN is from a valid directory of numbers assigned to the MSC **10.** If the TRN is not an MSID, a unique and temporary MSID must also be allocated for use during the service programming procedure.

In the network shown in FIGS. 1 and 2, the call is routed directly to the CSC **26** via voice connection **46,** although as shown in FIG. 3, the call may be forwarded, through call-forwarding, via a second voice connection **54** to a second CSC **44.** In either case, the TRN serves as the initial reference for the over-the-air service programming attempt and is supplied to the CSC **26** (or **44)** as part of call setup.

The TRN could be hosted in an Integrated Service Digital Network (ISDN) User-to-User element or part or the Calling Party number field, or other suitable means for conveying the number.

Once the call from the MSC **10** arrives at the CSC **26** the CSC responds in the following way. A voice operator (or a voice response unit, etc.) at the CSC **26** will begin a dialog with the user of mobile station **2,** during which the CSC **26** will identify (select) which HLR **18** or **38** (in FIGS. 2 and 3) will be used to communicate with the MSC **10** on a data connection to be established between the HLR **18** and MSC **10.** For example, a service provider may service both New York and Los Angeles with corresponding HLRs. A user from Los Angeles may wish to program the user's mobile station while visiting New York. In this case, the New York CSC operator may forward the user's call to a Los Angeles CSC operator. If the HLR selected for programming is directly connected to the CSC **26** (FIGS. 1 and 2), the CSC **26** begins the over-the-air service programming by contacting the designated HLR (HLR **18** via proprietary interface **24** or HLR **38** via proprietary interface **36** in FIGS. 1 and 2). The TRN that was supplied by the MSC **10** is provided to the designated HLR via CSC **26,** where the CSC **26** triggers the designated HLR to establish a data connection (through VLR **14** and interfaces **16** and **12)** to MSC **10.** In FIG. 1, the data connection includes the HLR **18,** interface **16,** VLR **14** interface **12** and MSC **10.** In FIG. 2, if HLR **18** is the desired HLR, the data connection is the same as FIG. 1. In FIG. 2, if HLR **38** is the desired HLR, the data connection includes HLR **38,** interface **48,** VLR **14,** interface **12** and the MSC **10.** In FIG. **3,** if the HLR **38** selected for over-the-air service programming is not directly connected to the CSC **26,** then the CSC **26** forwards the call to CSC **44** which is connected to HLR **38** and selected for over-the-air service programming via a voice connection **54.** The TRN that was assigned by the MSC **10** must be forwarded to CSC **44.** By call forwarding, the mobile station **2** can be serviced on any HLR which supports the OTASP procedures. In FIG. 3, the data connection includes the HLR **38,** interface **48,** VLR **14,** interface **12** and MSC **10.**

Once the designated HLR **(18** or **38)** has been triggered by the CSC **26** (in FIGS. 1 and 2), or HLR **38** by CSC **44** (in FIG. 3), the HLR establishes a data connection to the MSC **10** based on the TRN provided to the HLR from the CSC. The HLR **18** is configured to identify the MSC's address from the TRN, and because the HLR **18** usually stores records based on a mobile station's ESN and MSID, the HLR requires the mobile station's ESN and the temporary MSID from the MSC in order to store a record for the mobile station 2. The HLR also requires the MSID that is presently in the MS for use in SSD update procedures as will be explained later. Accordingly, the designated HLR contacts the MSC **10** via the data connection, in order to retrieve the mobile station 2's ESN, the MSID that is presently in the mobile station and the temporary MSID, if distinct from the TRN. We are assuming that the temporary MSID, the MSID presently stored in the MS and the ESN were not communicated to the CSC during the voice call set up and hence need to be retrieved from the MSC. As will be described in reference to the following flow charts and call diagrams, the data connection is then associated with the mobile station 2, and once associated, the CSC 26 (or **49)** may pass data to the mobile station 2 and program the mobile station.

FIG. 4A is a flowchart of the steps performed to functionally accomplish the inventive OTA service programming process. The process beings at step **S1** where in order to place the over-the-air service provisioning call the user, following an instruction manual provided with the telephone, dials the activation code preamble **("*22")** followed by the appropriate three to five digit extension, discussed earlier, corresponding with a specific system, SID, or TDMA SOC. During this step, the mobile station **2** transmits the over-the-air service programming request, the MSID that is presently in the mobile station and its unique ESN to the MSC, where the MSC stores the mobile station **2's** ESN and the MSID that is presently in the mobile station. The MSC allocates a Temporary Reference Number (TRN) identifying the mobile switching center and the mobile station. If the TRN is not an MSID, a unique and temporary MSID is also allocated for use during the service programming procedure.

The process then proceeds to step **S3** where the MSC servicing the mobile station **2** establishes a voice connection **46** between the mobile station **2** and the appropriate CSC (e.g., CSC **26** in FIG. 1).

After the voice connection is made, the process proceeds to step **S5** where the user provides user-specific information (such as residence address, credit card number, etc.) to a CSC operator at the CSC **26.** In light of the user-specific information, the process flows to step **S7** where the CSC **26** determines whether it is the correct CSC to service the user (e.g., CSC **44** of FIG. 3 may be the correct CSC). If not, the process proceeds to step **S9** where the mobile station **2's** call is forwarded to a correct CSC (e.g., CSC **44** in FIG. 3) and the process then flows to step **S5.** However, if in step **S7** it is determined that the user is connected with the correct CSC (e.g., CSC **26** in FIG. 1), the process flows directly to step **S11.**

In steps **S3** and **S9,** the TRN is provided from the MSC **10** to the CSC **26,** in the form of data, through the voice call set up procedure for the voice connection **46.** The TRN is unique to the call being made and is used by the CSC **26** and MSC **10** as a transient (temporary) identifier of the mobile station **2's** request for over-the-air service programming. Attributes of the TRN include (**1**) mobile station identifiability which permits the CSC to identify the mobile station in question, and (**2**) MSC addressability which permits other network resources, such as the HLR, to uniquely identify the MSC servicing the mobile station 2 by the TRN.

Up to this point in the process, a voice call and a TRN have been established, but a data connection which will enable OTA programming data to be downloaded to the mobile station 2 has not been established. Accordingly, after step **S7,** the process proceeds to Step **S11** where the CSC **(26** or **44)** triggers HLR **(18** or **38)** over a proprietary link (P) with a message including the TRN. Based on the MSC addressability attribute of the TRN, the HLR **(18** or **38)** is able to ascertain the address of the MSC **10** servicing the mobile station 2.

The process then proceeds to step **S13** where the HLR **18** dispatches a new over the air service programming INVOKE message, OTAServiceProgramming INVOKE (OTASERPROG) to the MSC **10** via VLR **14** (see FIGS. 1, 2 and 3). The OTASERPROG message is communicated through the VLR **14** because, by industry convention, communications from HLRs are typically routed through VLRs. Alternatively, however, the HLR **(18** or **38)** could dispatch the OTASERPROG message directly to the MSC **10.** The combination of the HLR **(18** or **38),** VLR **14** and MSC **10** (along with the corresponding interconnecting interfaces) form a data connection between the CSC **(26** or **44)** and the MSC **10** that parallels the on-going voice connection. **46** (or **46** and **54)** between the mobile station 2 and the CSC **(26** or **44).** This data link will later be used to communicate service programming data between the mobile station **2** and the HLR **18** (or **38).** After the step **S15,** the process proceeds to step **S17** which is shown in FIG. 4B.

FIG. **4B** is a flowchart that shows additional steps to the process started in the flowchart of FIG. **4A.** After step **S15** (FIG. 4A), the process flows to step **S15** where the MSC **10** receives the OTASERPROG message. In step **S17,** the MSC **10** associates the voice connection (call) with the data connection (e.g., as shown in FIG. 1, the data connection being between HLR **18,** interface **16,** VLR **14,** interface **12,** and MSC **10)** using the TRN supplied to it in the OTASERPROG message.

Up to this point in the process, a data connection has been established between the mobile station **2** and the HLR **18** (or **38),** but the HLR **18** (or **38)** does not yet have the specific information about the mobile station **2** in order to properly activate the mobile station 2. If the HLR **18** (or **38)** (cooperating with the authorization center AC **22** (or **42)** were to program the mobile station 2 without more information, the following two problems would arise. First, "pirated" mobiles could obtain access to the communications system, because there has not yet been any accountability made of the mobile station's ESN. Second, the HLR **18** (or **38)** requires a mobile's MSID and ESN in order to uniquely create and retrieve HLR **18** (or **38)** records corresponding to the mobile station 2. Also, the AC needs the MSID presently stored in the mobile station for use in SSD update procedure as will be explained later.

Accordingly, after step **S17,** the process proceeds to step **S19** where the MSC **10** sends an OTAServiceProgramming RETURN RESULT (otaserprog) message to the HLR **18** (or **38)** through the data connection, where the otaserprog message includes the mobile station 2's ESN, the MSID presently stored in the mobile station, and the temporary MSID if allocated at the MSC **10.** If the temporary MSID was allocated at the MSC, the TRN is no longer needed and is released. Hereafter, all data communications relating to the mobile station 2 is referenced by the temporary MSID (which could be the same as the TRN) and the ESN. Note that a convention used herein for identifying originating (INVOKE) messages uses UPPER CASE letters, and response (RETURN RESULT) messages use lower case letters (compare OTASERPROG, and otaserprog).

The process then proceeds to step **S21** where the HLR **18** (or **38)** receives the otaserprog message containing the mobile station 2's ESN, the MSID presently stored in the mobile station, and the temporary MSID. The combination of the ESN and the temporary MSID provide all the information required for the HLR **18** to keep a record for the mobile station **2,** and to communicate with the mobile station 2, via the data connection. The MSID presently stored in the mobile station is saved at the HLR for later use if SSD update procedures are performed. We are assuming that the temporary MSID, the MSID presently stored in the mobile station and the ESN were not communicated to the CSC during voice call set up and hence need to be retrieved from the MSC.

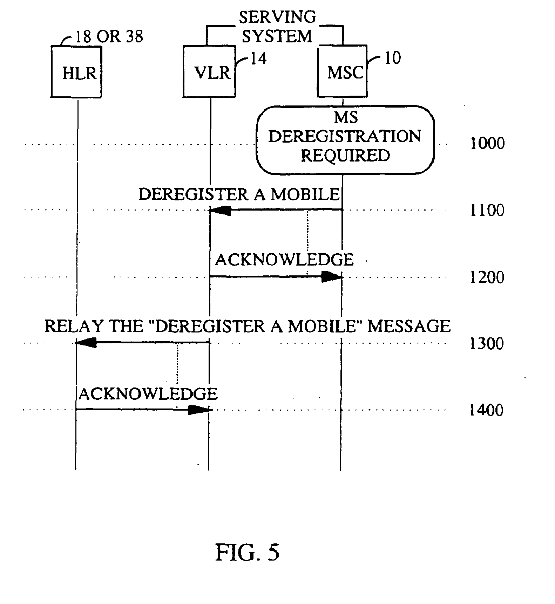

After step **S21,** the process flows to step **S23** where the HLR **18** (or **38)** determines whether other OTA services are to be performed for the mobile station **2.** If so, the process flows to the process shown in the flowchart of FIG. 4D, and later returns to step **S25.** If no other functions are to be performed, as determined in step **S23,** the process flows to step **S27.** In step **S25,** the HLR dispatches an OTA Data message, in OTASERPROG message, in which data required for service programming the user's mobile station **2** telephone (e.g., permanent MSID) is passed through the data connection and received by the mobile station **2.** The OTA Data message is the message that gets communicated between the MS **2** and the MSC **10.** Subsequently, a second OTA message (in step **S27**) is sent to the mobile station **2,** in OTASERPROG message, directing the mobile station **2** to transfer service programming data has been sent to the mobile station **2** to its non-volatile memory. In step **S29,** where the MSC **10** determines whether the mobile station **2** is to be deregistered (i.e., have the MSC/VLR, **10/14,** serving system remove the mobile station **2's** MSID from the serving system's registers). If the mobile station **2** is not to be deregistered, the process proceeds back to step **S33** of FIG. 4B. However, if the mobile station **2** is to be deregistered, the process proceeds to step **S31** where a deregistration process is performed (which will be explained with reference to FIG. 5). Once the deregistration process is performed, the process proceeds to step **S33.**

Then, in step **S33** the mobile station **2** terminates the voice connection with the CSC and the process ends. FIG. 4C is a call flow diagram using the OTASERPROG and otaserprog messages and which corresponds to the process described in the flowcharts of FIGS. 4A and 4B. As discussed above, the present invention contemplates that the VLR **14** and MSC 10 are used primarily as conduits for message transfer between the mobile station **2** and the HLR/AC **18/22** (or **38/42),** and need not play an active role in the mobile station **2** service programming process. This is achieved through definition of a novel (OTASERPROG) INVOKE and RETURN RESULT message, within which the OTA Data message, which is the message communicated between the MSC and the MS containing OTA Service Programming related information, can be encapsulated. The OTASERPROG message is sent from HLR **18** (or **38)** or the AC **22** (or **42)** to MSC **10.** If an encapsulated OTA Data message is present, it will generally be extracted by the MSC **10** from the OTASERPROG INVOKE message sent from the HLR **18** (or **38**) or the AC **22** (or **42)** to the MSC **10.**

The otaserprog message is sent from the MSC 10 to the HLR **18** (or **38)** or the AC **22** (or **42).** If an OTA Data message is to be sent to the HLR or the AC, it is encapsulated by the MSC **10** in the OTASERPROG RETURN RESULT message sent from the MSC **10** to the HLR **18** (or **38)** or the AC **22** (or **42).**

That is, the over-the-air service programming process may advantageously be performed without substantive involvement of any processing resources of the VLR/MSC (**14**/10).

Apart from communicating OTA Data messages between the MS and the HLR or the MS and the AC, the OTASERPROG INVOKE and RETURN RESULT messages being also used for other purposes such as "Attaching the MSC with the HLR via a Data Connection" and Sending Encryption Parameters to the MSC.

Although for completeness, the call flow diagrams of FIG. 4C (as well as the other flow diagrams) depict message transfer to and from the VLR/MSC, it is to be understood that the system according to the present invention does not contemplate that processing or control functions are performed within the VLR/MSC during the OTASP process.

In FIG. 4C (as well as the other call flow diagrams) general descriptive legends are provided with respect to the specific calls. In these figures, the dashed arrows represent a voice or traffic channel.

The structure of the call flow diagrams is described with reference to FIG. 4C. The top portion of FIG. 4C corresponds to the MS **2,** MSC **10,** VLR **14,** HLR 18, CSC **26,** HLR 38 and CSC **44** which are also shown in FIG. 3. The MSC 10 and VLR **14** jointly form a serving system which serve the MS 2 in the MS's present geographic location. The HLR **18** and the CSC **26** jointly form an initial home service ("initial"), but are replaced by redirected home service ("redirected") by forwarding the mobile station **2's** voice call, as will be described, to the redirected home service. Along the right hand portion of FIG. 4C labels (steps) indicative of steps in the signaling procedure.

Referring to step 100 in FIG. 4C, a call is delivered from the mobile station **2** ("MS **2")** to the CSC **26** at step **100,** which corresponds with steps **S1** and **S3** of FIG. 4A. In step 200, (step **S3** of FIG. 4A), an operator at the initial CSC **26** receives the call and begins a dialog with the user of the mobile phone. During the CSC operator's conversation with the user, the operator determines that the user should be assigned to the redirected HLR **38** and redirected CSC **44, S5** and **S7** of FIG. **4A.** Accordingly, in step 300 the CSC operator initiates a call-forwarding operation (step **S9** in FIG. 4A) where the mobile station **2's** call is forwarded to the redirected HLR 38 and the redirected CSC **44.** During this call forward operation, the TRN received at the first CSC **26** from the MSC **10** is sent to the redirected CSC **44.** Then, at step **400,** the mobile station **2's** user speaks with the CSC operator at the redirected CSC **44** and provides the redirected CSC operator with requisite information for establishing a service for the user's mobile station.

At step **500,** the CSC **44** contacts (triggers, step **S11** in FIG. 4A) the HLR **38** over the proprietary interface **36** (FIG. 3) and transfers the TRN to the HLR 38. With the TRN, the HLR derives the address of the MSC **10** based on the identifiability attribute associated with the TRN.

At step **600,** the HLR **38** transfers the TRN and an Action Code in an OTAServiceProgramming INVOKE message, OTASERPROG(TRN, ActionCode), to the VLR **14,** which simply forwards the same message in step **700** to the destination MSC 10. (Steps **600** and **700** correspond with step **S13** of FIG. 4A). The OTASERPROG message contains at least two fields including an action code field (ActionCode) and a TRN field. Data in the action code field is interpreted by the MSC **10** as "Attach the MSC with the HLR via a data connection". A value representative of the TRN is contained in the TRN data field and is used by the MSC to associate the correct MS with the data connection (i.e., HLR **38,** VLR **14,** and MSC **10),** see steps **S15** and **S17** of FIG. **4B.**

The MSC **10** responds to the HLR's 38 request by issuing a OTAServiceProgramming RETURN RESULT message, otaserprog (Temporary MSID, ESN, MSID presently stored in the mobile station), see step **S19** of FIG. 4B. The otaserprog message effectively reports the mobile station **2's** identification to the HLR **38** in the form of an ESN and the MSID presently stored in the mobile station and also sends the temporary MSID to the HLR.

At step **900,** the VLR **14** relays the temporary MSID, the MSID presently stored in the mobile station and ESN to the HLR **38,** where it is received by the HLR **38.** We are assuming the temporary MSID, the MSID presently stored in the MS and the ESN were not communicated to the CSC during the voice call set up and hence need to be retrieved from the MSC. Having the temporary MSID and the mobile station's ESN, the HLR **38** is then free to keep a record of the mobile station 2's programming data and can send relevant portions of the programming data to the mobile station **2** via an OTA Data message sent encapsulated to the MSC in an OTASERPROG message, which is shown as step **904** (step **S25** in FIG. 4B). As discussed above, once the programming data has been downloaded to the mobile station **2,** the mobile station **2** is instructed by the HLR to store the programming data, in non-volatile memory. The voice call with the redirected CSC **44** gets terminated. As a result, over-the-air service provisioning of the mobile station is accomplished. The information programmed in the MS is also stored in non-volatile memory in the HLR and/or AC.

An alternative call flow is to have the CSC **44** assign a temporary MSID at step **500,** in which case the HLR **38** would include the TRN and temporary MSID in the OTASERPROG message sent to the MSC **10.** In response, the MSC **10** would send back an ESN and the MSID presently stored in the MS at steps **800** and **900.**

Returning to the "other functions" discussed earlier with respect to step **S23** of FIG. 4B, FIG. 4D is a flowchart of the process steps for handling "other functions ". The relationship between FIGS. 4B and 4D is that if in step **S23** of FIG. 4B, it is determined that "other functions" are to be performed before the over-the-air service provisioning process proceeds further, the process flows from step **S23** to step **S39** in FIG. 4D. If no "other functions" are to be implemented, the process proceeds to step **S25** as shown in FIG. 4B. "Other Functions" as implemented in the present invention are explained with reference to FIG. 4D and FIGS. 6, 7 and 8.

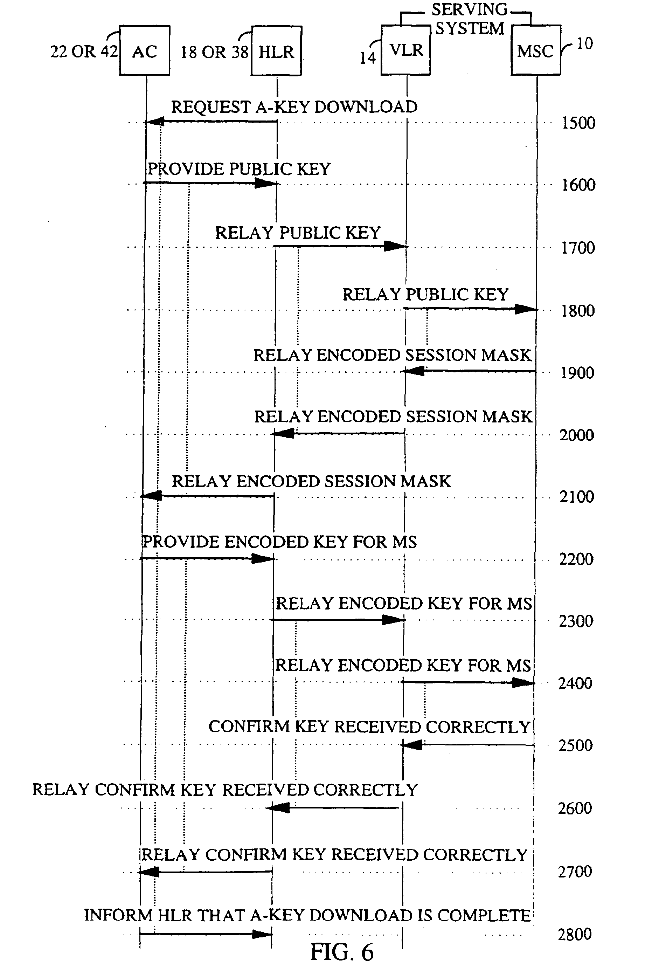

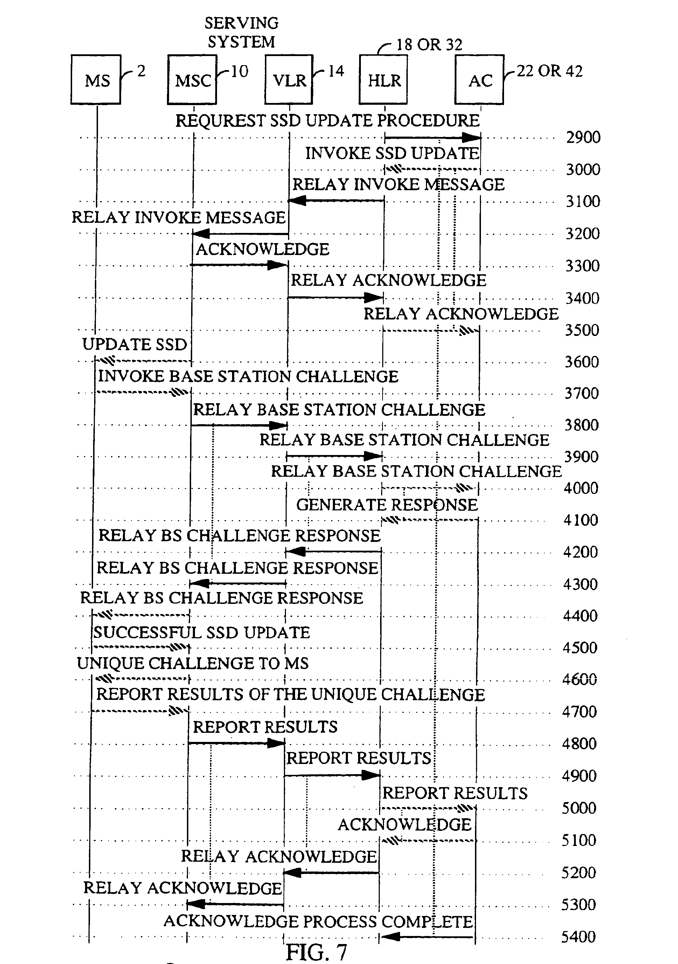

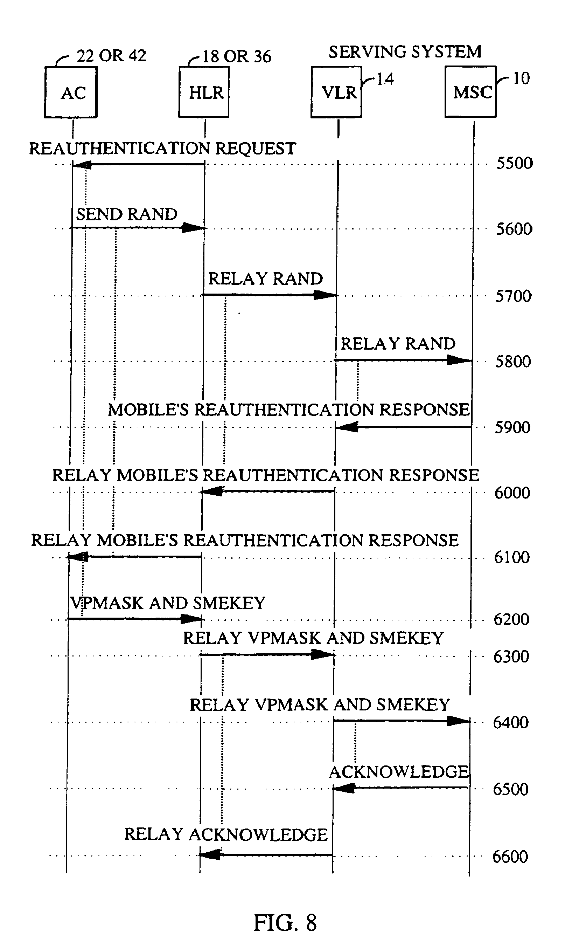

FIG. 4D is a flowchart of a process that is a continuation of the process shown in FIG. 4B. In step **S39** CSC **26** (or HLR **18)** determines whether an A-Key download procedure (to be described with reference to FIG. 6) is to be performed, and performs the A-key download procedure in step **S40,** and then proceeds to step **S41.** If it is determined in step **S39** that no A-key download procedure is to be performed, the process flows to step **S41,** which inquires whether an SSD update procedure (to be described with reference to FIG. 7) is to be performed. If so, the process proceeds to step **S42** where the SSD update procedure is performed, and the process proceeds to step **S43.** If it is determined in step **S41** than no SSD update procedure is to be performed, the process proceeds to step **S43,** where an inquiry is made regarding whether a reauthentication procedure (to be described with respect to FIG. 8) is to be performed. If so, the process proceeds to step **S44,** where the reauthentication procedure is performed. Otherwise, the process returns to step **S25** in FIG. 4B. If A-Key download is performed, and if voice privacy and/or message encryption is desired, SSD update necessarily precedes the reauthentication procedure. Each of the A-key download procedure, SSD update procedure, and Reauthentication procedure are described in more detail below.

Since the AC and the HLR can be separate from each other, the following discussion with respect to AC procedures presumes an AC that is separate from the HLR.

There are four operations that involve the AC:
1) Generating the A-key and transferring it to the mobile station (in what follows we implement the Rivest-Shamir-Adleman (RSA) method for A-Key Download, other methods for A-Key Download could be used as well);
2) Updating SSD;
3) Generating the VPMASK and SMEKEY; and
4) Storing the A-key and SSD into non-volatile memory.

There are several issues which must be addressed.
1) Where the authentication and A-key transfer related operations are initiated, the approach according to the present invention is to have them done in the AC. Thus, the HLR does not receive the A-key, the decryption exponent, or the product of the primes P and Q.
2) Where the OTA Data Messages are generated for the A-key transfer, according to the present invention the message is generated in the AC, encapsulated, and passed either directly or through the HLR to the MSC/VLR. Alternatively, the parameters are generated in the AC and passed to the HLR where the OTA Data Messages are formed. The former approach is preferable.
3) Whether the CSC directly interfaces with the AC, or through the HLR, according to the present invention the HLR is in control and thus, the CSC essentially only interfaces with the HLR.
4) The AC needs to be triggered by the HLR to generate the appropriate OTA Data Messages. Similarly, the AC needs to inform the HLR when the AC has completed its action.

The A-Key Download procedure according to the present invention is described with reference to FIG. 6. In FIG. 6, at step 1500, the new IS-41 AuthenticationCenterDirective INVOKE message, ACDIR (temporary MSID, ESN, ACACTION) is generated by the HLR **18** or **38** and sent to the AC 22 or **42.** This INVOKE message according to the present invention contains the ACACTION field directing the AC **22** to perform an A-key download for the subject mobile station 2 (FIG. 1). The mobile station **2** is identified by values included in the temporary MSID and ESN data fields of the ACDIR message.

At step **1600,** the AC **22** (or **42)** transfers the temporary MSID, ESN and a public encryption key generated at the AC, in an OTA Data Message, OTASERPROG[MIN, ESN, OTA Data Message] message, to HLR **18** (or HLR **38)** via an OTAServiceProgramming INVOKE message. The OTASERPROG message gets forwarded from the HLR to the MSC via the VLR. At the MSC, the OTA Data message containing the public encryption key gets sent to the mobile station. Once the mobile station **2** is in possession of the public encryption key, it uses it to encode a session mask which it transmits to the MSC in an OTA Data Message.

At step 1900, MSC 10 responds via the OTAServiceProgramming RETURN RESULT message, otaserprog [OTA Data Message] containing the encoded session mask within the OTA Data Message. The otaserprog message is relayed to the AC in steps **2000** and **2100.**

The AC decodes the session mask since it has the public encryption key and other parameters used to compute the public encryption key. The AC selects an A-Key, encodes it using the session mask. At step **2200,** the AC **22** (or **42)** transfers the temporary MSID, ESN and the OTA Data Message containing the encoded A-Key in the OTAService programming INVOKE message, OTASERPROG (temporary MSID, ESN, OTA Data message) to the HLR. Steps **2300** and **2400** relay the AC's encoded A-Key to the mobile station 2. The MS is able to decode the A-Key since it has the session mask that was used by the AC to encode the A-Key.

At step **2500,** the MSC **10** transfers from the mobile station 2 an OTA Data Message containing a confirmation that the A-Key was successfully received in an OTADataMessage, in a OTAServiceProgramming RETURN RESULT message, otaserprog[OTA Data Message]. In steps **2600** and **2700** the mobile station 2's confirmation is relayed to the AC.

At step **2800,** the AC **22** or **42** sends an empty AuthenticationCenterDirective RETURN RESULT to HLR **18** or **38** as an acknowledgment to the HLR **18** or **38** that HLR's request to invoke an A-key download in step **1500** has now been completed.

The SSD-Update procedure according to the present invention is described with reference to FIG. 7. The exemplary procedure and signaling scheme shown in FIG. 7 corresponds to the case in which SSD is not shared. Since the CSC may not actually decide to commit to the parameters that have been downloaded into the mobile station **2,** it is preferable that the SSD not be shared during an SSD update while OTA service programming. Nevertheless, sharing SSD could be used. Note that significant modifications to IS-41-C are not required to implement the SSD Update procedure according to the present invention. The AC is triggered by the HLR to perform SSD-Update and the HLR is informed by the AC at the conclusion of the SSD Update procedure.

Step **2900,** of the call flow diagram of FIG. **7,** shows a new IS-41 AuthenticationCenterDirective INVOKE message, ACDIR[temporary MSID, ESN, ACACTION, MSID presently in MS], according to the present invention that is transmitted from the HLR to the AC to request an SSD update procedure be performed. The message contains an ACACTION field which directs the AC **22** (or **42** if HLR **38** is selected) to perform an SSD update. The SSD update operation can be commenced immediately after the A-key was downloaded to the mobile station. Steps **3000-5300** are similar to those that exist for SSD Update procedure in IS41-C. Note that the MSID frequently stored in the MS is sent to the AC for use in computing the Authentication Response to a base station challenge from the MS. Base station challenge procedure forms part of the SSD update procedure.

At step **5400,** HLR 18 (or **38)** sends an empty AuthenticationCenterDirective, acdir[],message to AC **22** (or **42)** as an acknowledgment, completing the SSD Update Procedure.

Re-authentication for enabling Voice Privacy, Message Encryption or both, according to the present invention, are accomplished as follows.

Re-Authentication according to the present invention is implemented through the call flow illustrated in FIG. 8. In this figure, at step 5500, the new IS-41 message AuthenticationCenterDirective, INVOKE, ACDIR[temporary MSID, ESN, DGTSDIAL, ACACTION], contains the ACACTION field directing the AC **22** (or AC **42** if HLR **38** is selected) to perform the re-authentication procedure. Also included in the message are the temporary MSID, ESN and DGTSDIAL parameters (digits dialed by the mobile station).

At step **5600,** the AC **22** (or **42)** transfers an OTA Data Message containing a Random Number (RAND) to HLR **18** (or HLR 38 if selected) via the OTAServiceProgramming INVOKE message, OTASERPROG[OTA Data Message], which will ultimately be received by the MSC **10.** Steps **5700** and **5800** relay the message to the MSC **10.** At the MSC **10,** the OTA Data Message containing RAND is sent to the mobile station. The mobile station computes an Authentication Response (AUTHR) and includes it along with other parameters in an OTA Data Message to the MSC **10.**

At step **5900,** MSC 10 responds to the AC's message by sending the OTA Data Message containing AUTHR to VLR **14** via a OTAServiceProgramming RETURN RESULT message, otaserprog[OTA Data Message]. Steps 6000 and **6100** relay the MSC's message to the AC **22.**

At step 6200, the AC **22** determines that the mobile station has been reauthenticated correctly and sends the SMEKEY and VPMASK parameters to the HLR **18** via a AuthenticationCenterDirective RETURN RESULT message, acdir[SMEKEY, VPMASK]. Step **6300** and **6400** relay these parameters to the MSC **10** in an OTAServiceProgramming INVOKE message. Once provided with the SMEKEY and VPMASK, the MSC 10 is equipped to employ voice privacy and message encryption.

At step **6500,** MSC **10** sends an empty OTAServiceProgramming RETURN RESULT message, otaserprog[], serving as an acknowledgment that the VPMASK and the SMEKEY were received at the MSC **10,** which is relayed in step **6600** to the HLR.

While the VPMASK and SMEKEY parameters may be included in the OTAServiceProgramming INVOKE the first time it is sent to the MSC, carrying the RAND parameter encapsulated in the OTA Data Message, preferably these parameters are sent to the MSC after the AC receives the MS's Re-Authentication Response. This is preferred since the MSC does not have to determine whether the mobile station re-authentication process was successful--with this procedure, the AC knows this information and sends the VPMASK and the SMEKEY to the MSC only if the MS re-authenticated successfully.

Modifications to IS-41 network according to the present invention for implementing Re-authentication for enabling Voice Privacy, Message Encryption or both are to include VPMASK and SMEKEY in the OTAServiceProgramming INVOKE.

Returning to Step **S33** of FIG. **4B** discussed earlier Registration of the Mobile Station **2** after OTA service programming according to the present invention is accomplished as follows.

If the OTA service programming has been successful and the MSID has changed, the MSC/VLR should delete any database entry for the old MSID. The serving MSC/VLR should send a registration notification to the HLR to register the mobile station 2 and to obtain the user's profile. If the MSID has not changed, then the HLR can update the serving MSC/VLR with the IS41C operations- QualificationDirective and the AuthenticationDirective based on the information held at the HLR.

When the MSID has changed, it is desirable that the MSC/VLR perform normal IS-41 registration operations and obtain the user profile. However, the MSC does not know the new MSID, unless the MSC has parsed the OTA Data Message--which is not desirable.

In **IS-683,** the CDMA air interface standard for Over-the Air Service Programming, the mobile station's registration parameters are not set to values which cause registration when the mobile station completes OTA service programming and returns to monitoring a control channel. Since the mobile station may have the correct system identification number (SID), Network Identification number (NID), and registration zones, registration may not occur until the mobile station originates a call, the mobile station moves and registration is triggered, or the mobile station station's timer expires and performs periodic registration. While operating in the CDMA mode, the mobile station can be forced to register (assuming that the appropriate registration methods are enabled in the IS-95 System Parameters Message) by sending the mobile station the IS-95 Mobile Station Registered Message with the parameters set to values which will trigger registration. For example, setting the SID equal to 0 will trigger registration if parameter registration or zone based registration is enabled. In CDMA mode, the base station can obtain the MIN (IMSI) by an IS-95 Status Message. These methods cannot be used when performing OTA service programming in the analog mode.

Alternatively, registration can be done by transferring the new MSID to the MSC in one of the OTAServiceProgramming messages since the MSC only has the temporary MSID and the MSID previously stored in the MS. This permits the MSC to perform the IS-41 Registration Notification operation. Another alternative is modify IS-683 and other air interface OTASP standards to have the mobile station clear its registration variables when performing OTA service programming. This will cause the mobile station to register when it returns to the CDMA Paging Channel or analog control channel.

Upon receiving a successful indication of OTA service programming in which the MSID has changed, the serving MSC should also delete the old MSID from its database and perform the existing IS 41-C MSInactive operation with the old MSID (see FIG. 5) to the old HLR. It may be desirable to indicate to the old HLR that the MSID of the mobile station was changed. This could help avoid fraudulent entry into the network.

Releasing a Call according to the present invention is accomplished as follows.

The call can be released by the mobile station when the service programming session is completed. It should also be releasable by the CSC when the service programming session is completed.

The previous description of the preferred embodiments is provided to enable any person skilled in the art to make or use the present invention. The various modifications to these embodiments will be readily apparent to those skilled in the art, and the generic principles defined herein may be applied to other embodiments without the use of the inventive faculty. Thus, the present invention is not intended to be limited to the embodiments shown herein but is to be accorded the widest scope consistent with the principles and novel features disclosed herein.

### Alternative Embodiments

According to a first alternative embodiment, there is provided a method for over-the-air service programming a mobile station in a communications network, comprising the steps of transmitting service programming information from said communications network; and receiving at said mobile station said service programming information.

According to a second alternative embodiment, there is provided a station in a communications network, comprising means for transmitting service programming information from said communications network; and said mobile station for receiving at said mobile station said service programming information.

According to a third alternative embodiment, there is provided a method for over-the-air service programming a mobile station in a communications network, comprising the steps of receiving at said mobile station programming information transmitted from said communications network; and storing said service programming information.

According to a fourth alternative embodiment, there is provided a method for over-the-air service programming a mobile station in a communications network, comprising the steps of generating service programming information in said communications network; and transmitting and service programming information from said communications network.

According to a sixth alternative embodiment, there is provided a method for communicating information from a mobile station, comprising the steps of generating said information at said mobile station; and transmitting said information from said mobile station.

## Claims

1. A mobile station (2) configured for remote programming in a visited wireless communication system, the mobile station (2) **characterised by**:
a processing element configured to execute a set of instructions stored upon a memory element, wherein the set of instructions are for:
changing a configuration of the mobile station (2) if an over the air programming code message is entered by a user of the mobile station (2) at the mobile station (2);
passing an electronic serial number to a switching centre (10); and
concurrently facilitating a voice link to a customer service centre (26,44) and a data connection to a home registry (18,38) of the mobile station (2), wherein the customer service centre (26,44) and the home registry (18,38) are not stations in the visited wireless communication system.

2. The mobile station (2) of claim 1, wherein the over the air programming code message has a specific preamble entered by the user of the mobile station (2).

3. The mobile station (2) of claim 1, wherein changing the configuration of the mobile station (2) comprises changing a user identity of the mobile station (2).

4. The mobile station (2) of claim 1, wherein changing the configuration of the mobile station (2) comprises changing the subscription of the mobile station (2) from the visited wireless communication system to a second wireless communication system.

5. The mobile station (2) of claim 11, wherein changing the configuration of the mobile station (2) comprises changing the System Identification Number of a preferred service provider.

6. A system comprising:
the mobile station (2), as set forth in any preceding claim;
said switching centre (10) configured to allocate a transient identifier for the mobile station (2); and
a home system (18,20,22,38,40,42), including the home registry (18, 38), configured to:
store a set of instructions for a processor located at the mobile station (2);
establish said data connection between the mobile station (2) and the home registry (18,38) if the home system (18,20,22,38,40,42) receives the transient identifier for the mobile station (2); and
transmit the instructions to the mobile station (2) from the home system (18,20,22,38,40,42);
wherein the switching centre (10) is used as a conduit for the transmission of the instructions.

7. A method of remote programming of a mobile station (2) in a visited wireless communication system, the method **characterized by**:
changing a configuration of the mobile station (2) if an over the air programming code message is entered by a user of the mobile station (2) at the mobile station (2);
passing an electronic serial number to a switching centre (10); and
concurrently facilitating a voice link to a customer service centre (26, 44) and a data connection to a home registry (18,38) of the mobile station (2),
wherein the customer service centre (26, 44) and the home registry (18,38) are not stations in the visited wireless communication system.
